Europäisches Patentamt

European Patent Office

Office européen des brevets

(19)

(11) **EP 1 070 742 A1**

(12) **DEMANDE DE BREVET EUROPEEN**

(43) Date de publication:
**24.01.2001 Bulletin 2001/04**

(51) Int Cl.⁷: **C08L 33/12**
// (C08L33/12, 77:12, 51:00)

(21) Numéro de dépôt: **00401984.0**

(22) Date de dépôt: **10.07.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **19.07.1999  FR 9909321**

(71) Demandeur: **Atofina**
**92800 Puteaux (FR)**

(72) Inventeurs:
• **El Bounia, Nour-Eddine**
  **64300 Orthez (FR)**
• **Gensous, Francis**
  **64230 Lescar (FR)**
• **Gaillard, Patrice**
  **64153 Souchez (FR)**
• **Meunier, Gilles**
  **64230 Mazerolles (FR)**

(74) Mandataire: **Luziau, Nelly**
**Atofina**
**D.C.R.D./D.P.I.**
**4, Cours Michelet,**
**La Défense 10**
**92091 Paris La Défense Cedex (FR)**

(54) **Compositions à base de (co)polymère méthacrylique thermoplastique et articles faconnés obtenus à partir de ces compositions**

(57) Les compositions comprennent, en poids, 80 à 89 % de (co)polymère méthacrylique thermoplastique contenant majoritairement du méthacrylate de méthyle (A), 6 à 15 % d'au moins un agent renforçateur choc (B) et 1 à 5 % d'au moins un copolymère à séquences polyamides et polyéthers (C).

Application aux articles moulés transparents, résistants au choc et présentant de bonnes propriétés mécaniques en traction (allongement, module, contrainte).

## Description

L'invention est relative à des compositions à base de (co)polymère méthacrylique thermoplastique rigide contenant majoritairement des motifs méthacrylate de méthyle et aux articles façonnés par extrusion, injection, compression obtenus à partir de ces compositions.

Ces articles façonnés présentent une résistance au choc améliorée ainsi que de bonnes propriétés mécaniques notamment en traction (module d'élasticité, allongement à la rupture, contrainte à la rupture) tout en conservant une excellente transparence.

Les (co)polymères méthacryliques, contenant majoritairement des motifs méthacrylate de méthyle sont des polymères thermoplastiques de plus en plus utilisés en raison de leurs propriétés optiques exceptionnelles (brillance, transparence très élevée avec au moins 90% de transmission lumineuse dans le visible), leur dureté, leur aptitude au thermoformage, leur tenue au vieillissement, à la corrosion et aux agents atmosphériques et la facilité avec laquelle on peut les transformer (découpage, polissage, collage, pliage).

Ces (co)polymères thermoplastiques, du fait qu'ils sont rigides, sont susceptibles de se casser pendant les diverses phases de leur transformation ainsi que pendant leur transport et leur utilisation.

Pour améliorer leur résistance au choc, on peut leur ajouter des additifs renforçateurs à base de matières élastomères.

Ces additifs sont généralement des substances polymères ayant une structure à plusieurs couches, l'une au moins étant constituée par une phase élastomère. Leur indice de réfraction est ajusté pour obtenir un matériau transparent. Etant donné que c'est la phase élastomère contenue dans l'additif qui confère la résistance au choc, cet additif est ajouté à la matière thermoplastique rigide pour avoir une proportion convenable de l'élastomère. L'ajout de ces additifs renforçateurs choc peut permettre aussi d'améliorer l'allongement à la rupture des (co)polymères méthacryliques. Il est généralement nécessaire d'en ajouter de grandes quantités (de l'ordre de 40% du poids de la matière thermoplastique) pour obtenir une résistance au choc et un allongement appropriés. Cependant, l'amélioration de la résistance au choc et de l'allongement à la rupture est obtenue aux dépens de certaines propriétés mécaniques comme le module d'élasticité et la contrainte à la rupture.

Les additifs renforçateurs choc peuvent aussi être constitués de copolymères séquencés comprenant au moins une séquence élastomère.

On sait ainsi que des polyétheresteramides à séquences polyamides et polyéthers, par suite de la présence de ces séquences polyéther, ont des propriétés élastomères. Ces polymères sont résistants au choc et présentent d'excellentes propriétés mécaniques comme l'allongement à la rupture. En conséquence, on pourrait les utiliser pour améliorer les propriétés mécaniques (particulièrement l'allongement à la rupture) de différents polymères thermoplastiques et, pour certains d'entre eux, la résistance au choc.

Toutefois, en ce qui concerne les (co)polymères méthacryliques et, particulièrement, le polyméthacrylate de méthyle, on n'améliore la résistance au choc que lorsqu'on ajoute le polyétheresteramide en quantité importante et, dans ce cas, les propriétés mécaniques (en traction), comme le module d'élasticité et la contrainte, diminuent et le produit final perd en transparence.

Des compositions à base de (co)polymères méthacryliques rigides comprenant majoritairement des motifs méthacrylate de méthyle et présentant une résistance au choc améliorée et de bonnes propriétés mécaniques, notamment en traction, module d'élasticité, allongement à la rupture, contrainte à la rupture, tout en conservant leur transparence, sont très souhaitées en vue de leur utilisation, notamment comme vitrage automobile.

L'invention a donc pour objet de telles compositions.

Les compositions selon l'invention, comprennent, en poids, 80 à 89 % de (co)polymère méthacrylique thermoplastique (A) contenant majoritairement des motifs méthacrylate de méthyle, 6 à 15 % d'au moins un additif renforçateur choc (B) et 1 à 5 % d'au moins un copolymère à séquences polyamides et polyéthers.

Pour obtenir une amélioration de la résistance au choc et de l'allongement à la rupture et en même temps de meilleures valeurs du module d'élasticité et, même de la contrainte à la rupture, tout en conservant la transparence, on a ajouté, selon l'invention, au (co)polymère méthacrylique thermoplastique comprenant majoritairement des motifs méthacrylate de méthyle (MAM), un additif renforçateur choc en quantité très inférieure à celle utilisée jusqu'à présent pour obtenir une résistance au choc et un allongement à la rupture appropriés et, en outre, un ou des copolymères à séquence polyamides et polyéthers en faible quantité. Les compositions selon l'invention ont permis de trouver un compromis entre toutes ces propriétés.

Les compositions selon l'invention, comprennent de préférence, en poids, de 81 à 88 % de composant (A), de 10 à 15% de composant (B) et de 1 à 5 % de composant (C).

Le composant (A) est constitué par un (co)polymère méthacrylique thermoplastique comprenant majoritairement des motifs méthacrylate de méthyle, c'est-à-dire qu'il comprend de 51 à 100 %, de préférence 80 à 99 % en poids de motifs méthacrylate de méthyle et de 0 à 49 %, de préférence 1 à 20 % en poids de motifs comonomères à insaturation éthylénique copolymérisables avec le méthacrylate de méthyle.

Les monomères à insaturation éthylénique copolymérisables avec le méthacrylate de méthyle sont notamment choisis notamment parmi les monomères acryliques, méthacryliques, vinylaromatiques.

Comme monomères acryliques, on peut citer l'acide acrylique, les acrylates d'alkyle dans lesquels le groupe alkyle a de 1 à 8 atomes de carbone (comme l'acrylate de n-butyle, d'éthyle, de 2-éthylhexyle, d'isobutyle), les acrylates d'hydroxyalkyle ou d'alkoxyalkyle, dans lesquels le groupe alkyle a de 1 à 4 atomes de carbone, l'acrylamide, l'acrylonitrile.

Comme comonomères méthacryliques, on peut citer l'acide méthacrylique, les méthacrylates d'alkyle dans lesquels le groupe alkyle a de 2 à 8 atomes de carbone (comme le méthacrylate d'éthyle, d'isobutyle, de butyle secondaire, de butyle tertiaire), le méthacrylonitrile, les méthacrylates d'hydroxyalkyle ou d'alcoxyalkyle dans lesquels le groupe alkyle a de 1 à 4 atomes de carbone.

Comme monomères vinylaromatiques, on peut citer le styrène, les styrènes substitués (comme l'α-méthyl-styrène, le monochlorostyrène et le tert.-butyl-styrène).

Le (co)polymère méthacrylique thermoplastique (A) peut se présenter sous forme de perles ou de granulés.

Les perles sont obtenues par le procédé bien connu de polymérisation en suspension aqueuse du ou des monomères en présence d'un amorceur soluble dans le ou les monomères et d'un agent de suspension.

Les granulés peuvent être obtenus à partir des perles qui sont fondues en extrudeuse pour former des joncs qui sont découpés en granulés. Les granulés peuvent aussi être préparés par polymérisation en masse, procédé bien connu, consistant à polymériser le ou les monomères ou bien un sirop de prépolymère dissous dans le ou les monomères, en présence d'un amorceur et d'un agent de transfert de chaîne pour contrôler la masse moléculaire du polymère. Le polymère obtenu est forcé en fin de ligne dans une filière pour obtenir des joncs qui sont découpés en granulés.

Le composant (B) renforçateur choc (aussi appelé modifiant choc), utile dans l'invention, peut être constitué par un copolymère séquencé comprenant au moins une séquence élastomère résultant de la polymérisation de monomères comme le butadiène, substitué ou non, les acrylates d'alkyle ou d'aralkyle. Ce peut être ainsi particulièrement un copolymère biséquencé, comme le copoly( butadiène-bloc-méthacrylate de méthyle) ou un copolymère triséquencé comme le copoly(styrène-bloc-butadiène-bloc-méthacrylate de méthyle) dans lesquels la phase élastomère polybutadiène représente jusqu'à 50% environ en poids de la masse du copolymère séquencé.

Le composant (B) peut aussi être une substance polymère ayant une structure à plusieurs couches, l'une au moins étant constituée par une phase élastomère. Ces substances polymères peuvent ainsi être des particules obtenues par coagulation, par séchage par pulvérisation ou atomisation d'un latex élastomère. La fabrication de tels latex, utilisés pour le renforcement au choc de matrices thermoplastiques, est bien connue de l'homme de l'art. On sait notamment qu'en modifiant les conditions de fabrication de ces latex, on peut agir sur leur morphologie et, par voie de conséquence, sur leur aptitude à améliorer la résistance au choc et sur leur aptitude à maintenir les propriétés optiques de la matrice à renforcer.

Les différentes morphologies de latex élastomère connues à ce jour pourront être utilisées sans inconvénient dans le cadre de la présente invention. En particulier, on pourra utiliser un latex de morphologie "mou-dur" dont la première phase (ou coeur) est élastomère et dont la phase finale "dure" (ou couche externe) est un thermoplastique rigide. On peut obtenir ces latex en deux étapes, par exemple, dans une première étape, par la polymérisation en émulsion, en milieu aqueux, en présence d'un amorceur engendrant des radicaux libres et d'un agent émulsifiant, d'au moins un monomère (dit "mou") devant constituer la phase élastomère, choisi par exemple parmi des monomères comme le butadiène, substitué ou non, et les acrylates d'alkyle ou d'aralkyle et, dans une deuxième étape, par la polymérisation aussi en émulsion, en présence du polymère de la première étape, d'au moins un monomère devant constituer une phase "dure" compatible avec le polymère thermoplastique rigide (matrice) dont on veut améliorer la résistance au choc. Ce ou ces monomères (dits "durs") peuvent être choisis par exemple parmi les méthacrylates d'alkyle dans lesquels le groupe alkyle comprend de 1 à 4 atomes de carbone, les monomères vinylaromatiques comme le styrène et les styrènes substitués, les monomères acrylonitrile et méthacrylonitrile. La phase "dure" peut aussi être obtenue à partir d'un mélange de monomères dur(s) précédents et de comonomère(s) à insaturation éthylénique, comme un acrylate d'alkyle inférieur ou l'acide(méth)acrylique.

Eventuellement, la polymérisation des monomères ne constituant pas la phase finale "dure" pourra être effectuée en présence d'autres monomères polyfonctionnels à insaturations éthyléniques copolymérisables avec ceux-ci, en particulier des monomères de réticulation et/ou de greffage. Le polymère constituant la phase "dure" finale peut être formé en présence de monomère de réticulation. Comme monomères de réticulation bien connus que l'on peut utiliser, on peut citer les polyacrylates et les polyméthacrylates de polyols, tels que les diacrylates et les diméthacrylates d'alkylène glycol ; comme monomères de greffage utilisables, on peut citer les esters d'allyle, tels que l'acrylate et le méthacylate d'allyle.

Ainsi, comme décrit au FR-A-2092389, la phase élastomère peut être préparée à partir d'un mélange comprenant en poids, au moins 50 % d'acrylate d'alkyle ou d'aralkyle dans lequel le groupe d'alkyle a de 1 à 15 atomes de carbone, 0,05 à 5,0 % d'un monomère de réticulation, 0,05 à 5,0 % de monomère de greffage, 0 à 10 % d'un monomère hydrophile (tel que amides et esters alkyliques hydroxylés d'acide méthacrylique, l'acide(méth)acrylique), le reste étant éventuellement constitué par d'autres monomères copolymérisables à insaturation éthylénique (tel que le styrène) ; la phase thermoplastique rigide finale, polymérisée en présence de la phase élastomère, peut être obtenue à partir d'un mélange de monomères comprenant au moins 50 % en poids de méthacrylate d'alkyle, la phase élastomère et la phase thermoplastique présentant un degré minimal de rattachement chimique de 20 % environ.

On pourra aussi utiliser un latex de morphologie "dur-mou-dur", dont la première phase (coeur ou noyau), non élastomère, est polymérisée à partir des monomères pouvant constituer la matrice thermoplastique rigide à renforcer (A) ou la phase finale "dure" mentionnée précédemment, dont la phase intermédiaire est élastomère, obtenue par exemple à partir des monomères dits "mous" mentionnés précédemment, et dont la phase finale est formée à partir de monomères utilisables pour la matrice thermoplastique rigide (A) ou la phase finale "dure" mentionnée précédemment. En particulier, convient un latex tel que décrit dans le brevet US 3793402 qui est formé (1) d'un coeur non élastomère constitué par un copolymère obtenu à partir de 80 à 100 % en poids d'au moins un monomère dit "dur", comme un méthacrylate d'alkyle (alkyle en C1-4), styrène, (méth)acrylonitrile éventuellement associé (0-30 % en poids) à un ou plusieurs comonomères à insaturation éthylénique, comme un (méth)acrylate d'alkyle inférieur (alkyle en C1-4) et l'acide (méth)acrylique, 0 à 10 % en poids d'un monomère polyfonctionnel de réticulation et 0 à 10% en poids d'un monomère de greffage, tels que ceux mentionnés précédemment, (2) d'une couche intermédiaire élastomère, formée en présence du polymère (1), à partir de 50 à 99,9 % en poids de monomère(s) butadiène, substitué ou non et/ou acrylate d'alkyle dans lequel le groupe alkyle a de 1 à 8 atomes de carbone, de 0 à 49,9 % en poids de comonomère(s) à insaturation éthylénique tels que des (méth)acrylates d'alkyle inférieur (alkyle en C1-4), l'acide(méth) acrylique et le styrène, de 0 à 5,0 % en poids d'un monomère polyfonctionnel de réticulation et de 0,05 à 5,0 % en poids d'un monomère de greffage, tels que ceux mentionnés précédemment et (3) d'une couche externe dite "dure" ou de compatibilisation formée, en présence des polymères (1) et (2), à partir de monomères "durs" (méthacrylate d'alkyle en C1-4, styrène, (méth)acrylonitrile) éventuellement associés (0 -30 % en poids) à des comonomères à insaturation éthylénique comme un (méth)acrylate d'alkyle inférieur (alkyle en C1-4). En particulier, les différentes phases, coeur (1), couche intermédiaire (2) et couche externe (3) représentent, respectivement, en poids, 10 à 40 %, 20 à 60 % et 10 à 70 % de la masse totale du copolymère de composite tricouches ou (triphases).

D'autres morphologies utilisables sont celles, plus complexes, décrites dans les brevets US-A-4 052 525, EP-B-270865 et FR-A-2 446 296.

Pour résumer, on peut dire que le composant (B) peut être constitué de particules comportant au moins une couche élastomérique obtenue à partir de monomères "mous" et une couche de compatibilisation avec la matrice (A), obtenue à partir de monomères "durs". De manière générale, le composant (B) se présente sous forme d'un copolymère composite multi-couches, dont les particules peuvent avoir un diamètre moyen compris entre 40 et 500 nm.

Le copolymère (C) est un copolymère à séquences polyamides et polyéthers.

Ces copolymères (C) à séquences polyamides et polyéthers résultent de la copolycondensation de séquences polyamides à extrémités réactives avec des séquences polyéthers à extrémités réactives, telles que, entre autres :

**1)** Séquences polyamides à bouts de chaîne diamines avec des séquences polyoxyalkylènes à bouts de chaînes dicarboxyliques.

2) Séquences polyamides à bouts de chaînes dicarboxyliques avec des séquences polyoxyalkylènes à bouts de chaînes diamines obtenues par cyanoéthylation et hydrogénation de séquences polyoxyalkylènes alpha-oméga dihydroxylées aliphatiques appelées polyétherdiols.

**3)** Séquences polyamides à bouts de chaînes dicarboxyliques avec des polyoxyalkylèneglycols, les produits obtenus étant, dans ce cas particulier, des polyétheresteramides. Les copolymères (C) sont avantageusement de ce type.

Les polymères (C) à séquences polyamides et polyéthers peuvent aussi comprendre des motifs répartis de façon aléatoire. Ces polymères peuvent être préparés par la réaction simultanée du polyéther et des précurseurs des séquences polyamides.

Par exemple, on peut faire réagir du polyoxyalkylène glycol, un lactame (ou un alpha-oméga amino-acide) et un diacide carboxylique en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à séquences polyamides et polyéthers qu'ils proviennent de la copolycondensation de séquences polyamides et polyéthers préparées auparavant ou d'une réaction du polyoxyalkylène glycol et des précurseurs des sequences polyamides présentent, par exemple, des duretés shore D pouvant être comprises entre 20 et 75 et avantageusement entre 30 et 70 et une viscosité intrinsèque entre 0,8 et 2,5 mesurée dans le métacrésol à 250°C pour une concentration initiale de 0,8 g/100 ml. Les MFI peuvent être compris entre 5 et 50 (235°C sous une charge de 1 kg).

La masse moléculaire moyenne en nombre $\overline{Mn}$ des séquences polyamides est généralement comprise entre 300 et 15 000 et de préférence entre 600 et 5 000. Celle des séquences polyéther est généralement comprise entre 100 et 6 000 et de préférence entre 200 et 3 000.

La proportion en poids de séquences polyéther par rapport au poids total du copolymère (C) peut varier entre 5 et 85%, elle est de préférence comprise entre 10 et 50%, tout particulièrement de 30 à 45 %.

Les polyamides à groupements dicarboxyliques placés aux extrémités de la chaîne sont obtenus selon des méthodes connues pour la préparation de tels polyamides, par exemple par polycondensation d'un lactame ou d'un α,ω-amino-acide, ou bien d'un diacide avec une diamine, polycondensations qui sont effectuées en présence d'un excès d'un diacide organique dont les fonctions carboxyliques sont de préférence fixées aux extrémités de la chaîne hydrocarbonée; ces diacides carboxyliques se fixent pendant la polycondensation comme constituants de la chaîne macromoléculaire du polyamide, en particulier aux extrémités de cette chaîne, ce qui permet d'obtenir un polyamide α,ω-dicarboxylique.

Le polyamide peut être obtenu à partir de lactames ou d'α,ω-amino-acides dont la chaîne hydrocarbonée a un nombre d'atomes de carbone compris entre 4 et 14 comme par exemple le caprolactame, le lauryllactame, l'oenantholactame, l'undécanolactame, le dodécanolactame, l'acide 11-amino-undécanoïque, l'acide 12-amino-dodécanoï-que.

Le polyamide peut également être un produit de condensation d'un acide dicarboxylique avec une diamine aliphatique ayant de 6 à 12 atomes, arylique et/ou cyclique saturé comme par exemple les polyamides 6.6, 6.9, 6.10, 6.12, 9.6, produits de condensation de l'hexaméthylène diamine avec l'acide adipique, l'acide azélaïque, l'acide sébacique, l'acide 1,12- dodécanedioïque et de la nonaméthylène diamine avec l'acide adipique.

Les diacides utilisés pour obtenir des polyamides à groupements carboxyliques terminaux sont des diacides carboxyliques, de préférence aliphatiques, ayant de 4 à 20 atomes de carbone comme par exemple les acides succinique, adipique, subérique, azélaïque, sébacique, decanedioïque, undécanedioïque, dodécanedioïque. Des diacides du type cycloaliphatiques ou aromatiques peuvent éventuellement convenir.

Les polyoxyalkylène glycols utilisables pour la réaction avec le polyamide dicarboxylique sont des polyoxyalkylène glycols linéaires ou ramifiés tels que polyoxyéthylène glycol, polyoxypropylène glycol, polyoxytétraméthylène glycol ou leurs mélanges.

De préférence, on utilise un polyétheresteramide dont la séquence élastomère polyéther est compatible avec le (co)polymère méthacrylique thermoplastique. On préfère utiliser des polyétheresteramides à séquences polyamide et polyéther, le rapport en poids des séquences polyamide à polyéther étant de préférence de 1. La séquence polyéther, en particulier, est du polyoxyéthylène et la séquence polyamide est du polyamide 12.

Des polymères (C) à séquences polyamides et polyéthers sont décrits, en particulier, dans les brevets US 4331786, US 4115475, US 4195015, US 4839441, US 4864014 et les brevets français 1444437, 2178205 et 2273021.

Eventuellement, des additifs tels que antioxydants, stabilisants contre la lumière et la chaleur, ignifugeants peuvent être ajoutés au polycondensat polyétheresteramide ou au cours de la polycondensation.

Les compositions selon l'invention peuvent être obtenues en mélangeant les composants (A), (B) et (C) et éventuellement des additifs usuels, par tout moyen approprié, par exemple dans un mélangeur du type Brabender, une extrudeuse monovis ou à double vis etc., à des températures variant de 200°C à 250°C.

Des additifs usuels que l'on peut ajouter à la composition (A) + (B) + (C) comprennent, par exemple, des stabilisants empêchant une dégradation par oxydation, par la chaleur ou par la lumière ultraviolette, des lubrifiants, colorants, pigments, charges et plastifiants.

On obtient des granulés qui peuvent être utilisés pour fabriquer des articles façonnés par extrusion, injection, compression. Ces articles façonnés peuvent se présenter sous la forme de plaques ou produits moulés de formes variées.

Les compositions selon l'invention sont utilisables dans différents secteurs techniques, éventuellement en association avec d'autres matières thermoplastiques. Des applications envisageables pour les compositions selon l'invention, sont, par exemple, des disques optiques obtenus par injection, des vitrages pour automobiles (custodes, vitre arrière) obtenus par exemple, par formage à chaud ou injection-moulage, des protections de phares obtenues par coextrusion d'une composition selon l'invention et d'une autre matière thermoplastique telle que du polycarbonate, des films de protection déposés par coextrusion plaxage, surmoulage.

Dans les exemples illustrant l'invention, on prépare des compositions sous forme de granulés par mélange dans une extrudeuse double vis. Les composants utilisés sont les suivants :

Composant A = granulés de produits Oroglas V825 T® de la société Atoglas Europe SAS qui sont constitués de copolymère de méthacrylate de méthyle (99% en poids) et d'acrylate d'éthyle (1% en poids) de masse moléculaire moyenne en poids de 90 000 g/mole environ.

Composant B = granulés de renforçateur choc tricouches ayant la composition décrite à l'exemple 2 de l'USP 3793402 :

- un coeur formé d'un copolymère de méthacrylate de méthyle (99,8 %) et de méthacrylate d'allyle (0,2 %),

- une couche intermédiaire formée de copolymère d'acrylate de butyle (79,4 %), de styrène (18,6 %) et de méthacrylate d'allyle (2 %) et
- une couche externe (ou couche de compatibilisation) formée de copolymère de méthacrylate de méthyle (96 %) et d'acrylate d'éthyle (4 %).

La répartition en poids du coeur, de la couche intermédiaire et de la couche externe est, respectivement, de 30 %, 50 % et 20 %.

Composant C = granulés de Pebax MV 1074® de la société Elf Atochem S.A. qui sont constitués de polyétheresteramide à séquences polyamides et polyéthers, les séquences polyamides étant un polyamide 12, de masse moléculaire moyenne en nombre de 1500, et les séquences polyéthers étant du polyoxyéthylène de masse moléculaire moyenne en nombre de 1500.

Les granulés obtenus sont moulés par injection pour former des éprouvettes de 2 cm de largeur et de 15 cm de longueur (éprouvettes haltère à usages multiples selon la norme ISO 527/1A.

Les propriétés mécaniques de ces éprouvettes sont mesurées en utilisant les méthodes suivantes :

- Résistance au choc = Izod entaillé = ISO 180/1A
- Mesures en traction : ISO 527/1A pour :

  □ module de traction
  □ allongement à la rupture
  □ contrainte à la rupture

Ces mesures sont aussi réalisées sur des éprouvettes témoin préparées de la même manière mais ayant des compositions hors invention.

EXEMPLES

On a mélangé les composants (A) (copolymère méthacrylique), (B) (renforçateur choc) et (C) (polyétheresteramide) dans les proportions indiquées dans le tableau en utilisant une extrudeuse double vis du type Haake, la température variant de 230°C à 250°C entre la zone d'alimentation en granulés et la filière.

On obtient des joncs que l'on coupe pour obtenir des granulés.

On prépare les éprouvettes par moulage par injection des granulés obtenus en utilisant une machine d'injection Arburg, le diamètre de la vis étant de 25 mm, le volume injecté de 39 cm$^3$ et la force de fermeture de 35 MPa avec le profil de températures variant de 240°C à 250°C et une température de moule de 50°C.

Tableau

| Exemples | Composants | | | Propriétés | | | |
|---|---|---|---|---|---|---|---|
| | A (% en poids) | B (% en poids) | C (% en poids) | Essais en traction | | | Choc Izod entaillé (kJ/m$^2$) |
| | | | | Module (MPa) | Allongement (%) | Contrainte (MPa) | |
| 1 (témoin) | 100 | - | - | 3479 | 2,6 | 63,5 | 1,50 |
| 2 (témoin) | 90 | 10 | - | 3150 | 6,0 | 63 | 3,60 |
| 3 (témoin) | 60 | 40 | - | 2230 | 32,0 | 42 | 6,30 |
| 4 (témoin) | 95 | - | 5 | 3244 | 8,6 | - | 1,88 |
| 5 (témoin) | 90 | - | 10 | 2983 | 47,9 | 41 | 2,03 |
| 6 (témoin) | 60 | - | 40 | 1507 | 20,5 | 34 | 3,50 |
| 7 | 89 | 10 | 1 | 3160 | 16 | 66,10 | 4,8 |
| 8 | 88 | 10 | 2 | 3120 | 28 | 61 | 5,0 |
| 9 | 85 | 10 | 5 | 2930 | 37 | 47 | 5,1 |
| 10 | 82 | 15 | 3 | 2920 | 33 | 46 | 5,3 |

Tableau   (suite)

| Exemples | Composants | | | Propriétés | | | |
|---|---|---|---|---|---|---|---|
| | A (% en poids) | B (% en poids) | C (% en poids) | Essais en traction | | | Choc Izod entaillé (kJ/m$^2$) |
| | | | | Module (MPa) | Allongement (%) | Contrainte (MPa) | |
| 11 (témoin) | 90 | 9 | 1 | 3100 | 6 | 60 | 3,6 |
| 12 (témoin) | 80 | 10 | 10 | 2711 | 50 | 41 | 5,2 |
| 13 (témoin) | 70 | 10 | 20 | 2186 | 19 | 41 | 5,9 |
| 14 (témoin) | 55 | 40 | 5 | 1990 | 54 | 39 | 5,3 |

Dans les exemples selon l'invention (7 à 10), on peut noter que les quantités individuelles en composants à caractère élastomère (B) et (C) ainsi que leur somme sont très inférieures à celles nécessaires pour obtenir une résistance au choc et un allongement à la rupture corrects (comme ceux de l'exemple 3 témoin).

Cependant, dans les conditions spécifiques selon l'invention, on remarque que l'on obtient un bon compromis des valeurs de la résistance au choc, du module, de l'allongement à la rupture et même de la contrainte à la rupture ; les produits obtenus conservent aussi leur transparence, ce que l'on cherchait à obtenir.

## Revendications

1.   Compositions comprenant, en poids, 80 à 89% de (co)polymère méthacrylique thermoplastique contenant majoritairement du méthacrylate de méthyle (A), 6 à 15% d'au moins un agent renforçateur choc (B) et 1 à 5% d'au moins un copolymère à séquences polyamides et polyéthers (C).

2.   Compositions selon la revendication 1, com-prenant, en poids, 81 à 88% de composant (A), 10 à 15% de composant (B) et 1 à 5% de composant (C).

3.   Compositions selon l'une des revendica-tions 1 et 2, dans lesquelles le composant (A) est un (co)polymère méthacrylique comprenant 51 à 100%, de préférence 80 à 99% de méthacrylate de méthyle et de 0 à 49%, de préférence 1 à 20% de comonomère(s) à insaturation éthylénique copolymérisables avec le méthacrylate de méthyle.

4.   Compositions selon la revendication 3, dans lesquelles le ou les comonomères sont choisis parmi les monomères acryliques, méthacryliques et vinylaromatiques.

5.   Compositions selon l'une des revendica-tions 1 à 4, dans lesquelles le composant (B) est formé par un copolymère séquencé comprenant au moins une séquence élastomère ou un copolymère composite multicouche comprenant au moins une couche élastomère.

6.   Compositions selon la revendication 5, dans lesquelles la séquence élastomère du copolymère séquencé est constituée par un polymère dérivant de monomères butadiène substitué ou non, acrylates d'alkyle ou d'aralkyle.

7.   Compositions selon la revendication 5 dans lesquelles la couche élastomère du copolymère composite est formée par un polymère dérivant de monomères butadiène substitué ou non, acrylates d'alkyle ou d'aralkyle éventuellement de comonomères à insaturation éthylénique, de monomères de réticulation et/ou de greffage.

8.   Compositions selon l'une des revendications 1 à 7, dans lesquelles le composant (C) est un copolymère résultant de la copolycondensation de séquences polyamides à extrémités réactives avec des séquences polyéthers à extrémités réactives.

9.   Compositions selon la revendication 8, dans lesquelles le copolymère résulte de la copolycondensation de séquences polyamides à bouts de chaîne diamines avec des séquences polyoxyalkylènes à bouts de chaînes dicarboxyliques.

**10.** Compositions selon la revendication 8, dans lesquelles le copolymère résulte de la copolycondensation de séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.

**11.** Compositions selon la revendication 8, dans lesquelles le copolymère résulte de la copolycondensation de séquences polyamides à bouts de chaînes dicarboxyliques avec des polyoxyalkylène glycols formant des polyétheresteramides.

**12.** Compositions selon l'une des revendications 8 à 11, dans lesquelles la masse moléculaire moyenne en nombre $\overline{Mn}$ des séquences polyamides est comprise entre 300 et 15 000 et de préférence entre 600 et 5 000 et celle des séquences polyéther est comprise entre 100 et 6 000 et de préférence entre 200 et 3 000.

**13.** Compositions selon l'une des revendications 8 à 12, dans lesquelles la proportion en poids des séquences polyéther par rapport au poids total du copolymère (C) est comprise entre 5 et 85 %, de préférence entre 10 et 50 % et particulièrement entre 30 et 45 %.

**14.** Compositions selon l'une des revendications 11 à 13, dans lesquelles le composant (C) est un copolyétheresteramide à séquences polyamides et polyéthers, les séquences polyéther étant compatibles avec le (co)polymère constituant le composant (A).

**15.** Compositions selon la revendication 14, dans lesquelles le rapport en poids séquences polyamide séquences polyoxyalkylène est égal à 1.

**16.** Compositions selon la revendication 15, dans lesquelles le copolyétheresteramide comprend des séquences polyamide 12 et polyoxyéthylène.

**17.** Articles moulés obtenus par extrusion, injection ou compression d'une composition conforme à l'une des revendications 1 à 16.

**Office européen des brevets**

**RAPPORT DE RECHERCHE EUROPEENNE**

Numéro de la demande

EP 00 40 1984

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | PATENT ABSTRACTS OF JAPAN<br>vol. 015, no. 173 (C-0828),<br>2 mai 1991 (1991-05-02)<br>& JP 03 039349 A (ASAHI CHEM IND CO LTD),<br>20 février 1991 (1991-02-20)<br>* abrégé * <br>--- | 1-8,11 | C08L33/12<br>//(C08L33/12,<br>77:12,51:00) |
| X | AN 90-365438: PLASDOC – CENTRAL PATENTS INDEX – BASIC ABSTRACTS JOURNAL, SECTION A.,<br>1990, XP002151442<br>DERWENT PUBLICATIONS LTD. LONDON., GB<br>* abrégé *<br>& JP 02 263863 A (TORAY IND INC)<br>26 octobre 1990 (1990-10-26)<br>----- | 1-8 | |

| DOMAINES TECHNIQUES RECHERCHES (Int.Cl.7) |
|---|
| C08L |

Le présent rapport a été établi pour toutes les revendications

| Lieu de la recherche | Date d'achèvement de la recherche | Examinateur |
|---|---|---|
| LA HAYE | 30 octobre 2000 | Schueler, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                    EP 00 40 1984

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

30-10-2000

| Document brevet cité au rapport de recherche | Date de publication | Membre(s) de la famille de brevet(s) | Date de publication |
|---|---|---|---|
| JP 03039349 A | 20-02-1991 | AUCUN | |

EPO FORM P0460

Pour tout renseignement concernant cette annexe : voir Journal Officiel de l'Office européen des brevets, No.12/82